(19) Europäisches Patentamt
European Patent Office
Office européen des brevets

(11) **EP 3 691 314 A1**

(12) **EUROPEAN PATENT APPLICATION**
published in accordance with Art. 153(4) EPC

(43) Date of publication:
**05.08.2020 Bulletin 2020/32**

(51) Int Cl.:
**H04W 8/24** (2009.01)     **H04W 16/32** (2009.01)
**H04W 72/04** (2009.01)

(21) Application number: **18863079.2**

(22) Date of filing: **26.09.2018**

(86) International application number:
**PCT/JP2018/035742**

(87) International publication number:
**WO 2019/065761 (04.04.2019 Gazette 2019/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.09.2017 JP 2017187260**

(71) Applicant: **NTT DOCOMO, INC.**
**Chiyoda-ku**
**Tokyo 100-6150 (JP)**

(72) Inventors:
• **UCHINO, Tooru**
**Tokyo 100-6150 (JP)**
• **TAKAHASHI, Hideaki**
**Tokyo 100-6150 (JP)**
• **UMESH, Anil**
**Tokyo 100-6150 (JP)**

(74) Representative: **Hoffmann Eitle**
**Patent- und Rechtsanwälte PartmbB**
**Arabellastraße 30**
**81925 München (DE)**

(54) **USER EQUIPMENT AND BASE STATION DEVICE**

(57) A user device performs communication with a base station apparatus and includes: a control unit that computes a buffer size based on a radio capability parameter of the user device; a transmission unit that transmits a capability indication including the radio capability parameter to the base station apparatus; and a reception unit that receives a signal transmitted from the base station apparatus using a buffer with the computed buffer size.

## FIG.5

**Description**

TECHNICAL FIELD

The present invention relates to a user device and a base station apparatus in a radio communication system.

BACKGROUND ART

In 3rd Generation Partnership Project (3GPP), a radio communication scheme (hereinafter, the radio communication scheme is referred to as an "NR") called 5G or new radio (NR) has been discussed in order to realize a more increase in a system capacity, more acceleration of a data transmission speed, a lower delay in a radio section, and the like. In the NR, various radio technologies have been discussed in order to satisfy requirement conditions in which delay of a radio section is set to 1 ms or less while realizing a throughput of 10 Gbps or more.

Here, in Long Term Evolution (LTE), a user entity (UE) category is defined as information indicating a baseband capability of a UE. It is defined that a UE indicates, to all networks, an RF capability (radio capability) and a UE category (for example, see Non-Patent Document 1). The RF capability includes, for example, information indicating a band combination (band combination information) supported by a UE and information indicating the number of multiple-input and multiple-output (MIMO) layers (for example, see Non-Patent Document 2).

CITATION LIST

NON-PATENT DOCUMENT

Non-Patent Document 1: 3GPP TS 36.331 V14.3.0 (2017-06)
Non-Patent Document 2: 3GPP TS 36.306 V14.3.0 (2017-06)

SUMMARY OF THE INVENTION

PROBLEM TO BE SOLVED BY THE INVENTION

In NR, in order for a network side to acquire a radio capability or a baseband capability of a user device, it is necessary to appropriately perform UE capability notification (indication) by considering a signaling overhead. In addition, it is necessary for a base station apparatus to accurately identify a capability of a user device and cause the user device to perform efficient communication.

The invention is made in view of the foregoing circumstances and an object of the invention is to allow a base station apparatus to accurately identify a capability of a user device and perform efficient communication in a radio communication system.

MEANS FOR SOLVING PROBLEM

According to the technology of the present disclosure, there is provided a user device that performs communication with a base station apparatus, the user device including: a control unit that computes a buffer size based on a radio capability parameter of the user device; a transmission unit that transmits a capability indication including the radio capability parameter to the base station apparatus; and a reception unit that receives a signal transmitted from the base station apparatus using a buffer with the computed buffer size.

EFFECT OF THE INVENTION

According to the technology of the present disclosure, it is possible to allow a base station apparatus to accurately identify a capability of a user device and perform efficient communication in a radio communication system.

BRIEF DESCRIPTION OF DRAWINGS

Fig. 1 is a diagram illustrating a configuration example of a radio communication system according to an embodiment of the invention;

Fig. 2 is a diagram illustrating an example (1) of UE categories in LTE;

Fig. 3 is a diagram illustrating an example (2) of the UE categories in LTE;

Fig. 4 is a diagram illustrating an example (3) of the UE categories in LTE;

Fig. 5 is a sequence diagram illustrating an example of UE capability indication according to the embodiment of the invention;

Fig. 6 is a sequence diagram illustrating an example (1) in which a UE buffer size is changed according to the embodiment of the invention;

Fig. 7 is a sequence diagram illustrating an example (2) in which the UE buffer size is changed according to the embodiment of the invention;

Fig. 8 is a diagram illustrating an example of a functional configuration of a base station apparatus 100 according to the embodiment of the invention;

Fig. 9 is a diagram illustrating an example of a functional configuration of a user device 200 according to the embodiment of the invention; and

Fig. 10 is a diagram illustrating an example of a hardware configuration of the base station apparatus 100 and the user device 200 according to the embodiment of the invention.

MODE(S) FOR CARRYING OUT THE INVENTION

Hereinafter, embodiments of the invention will be described with reference to the drawings. Note that embodiments to be described below are exemplary and the embodiments to which the invention is applied are not limited to the following embodiments.

In an operation of a radio communication system according to the embodiment, conventional technologies are appropriately used. Here, the conventional technologies are, for example, conventional LTE, but the conventional technologies are not limited to the conventional LTE. The term "LTE" used in the present specification is assumed to have a broad meaning including LTE-Advanced and a scheme subsequent to LTE-Advanced (for example, NR) unless otherwise stated.

In an embodiment to be described below, terms such as a synchronization signal (SS), a primary SS (PSS), a secondary SS (SSS), a physical broadcast channel (PBCH), a physical RACH (PRACH), a physical downlink control channel (PDCCH), and a physical downlink shared channel (PDSCH) used in the conventional LTE will be used for the sake of description convenience. However, the same signals, functions, and the like may be referred to other names. The above-described terms in the NR correspond to an NR-SS, an NR-PSS, an NR-SSS, an NR-PBCH, an NR-PRACH, an NR-PDCCH, an NR-PDSCH, and the like.

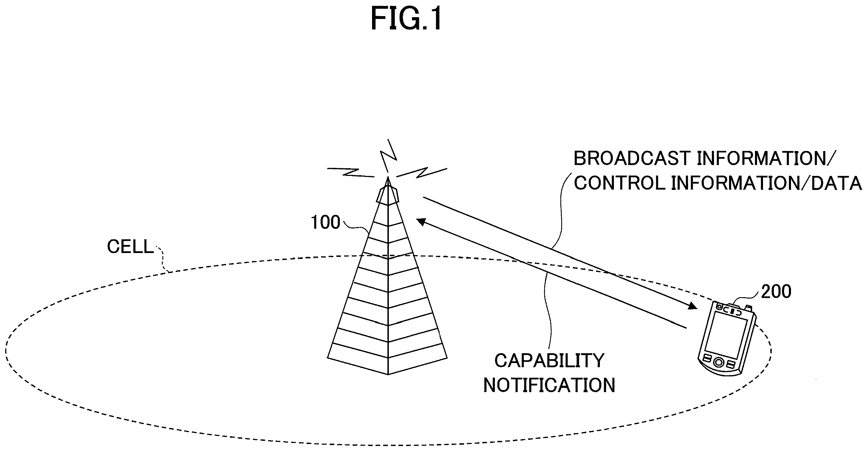

Fig. 1 is a diagram illustrating a configuration example of a radio communication system according to the embodiment of the invention. The radio communication system according to the embodiment of the invention includes a base station apparatus (base station device) 100 and a user device 200, as illustrated in Fig. 1. In Fig. 1, one base station apparatus 100 and one user device 200 are illustrated, but this is exemplary and the plurality of base station apparatuss and the plurality of user devices may be used.

The base station apparatus 100 is a communication device that provides one or more cells and performs radio communication with the user device 200. As illustrated in Fig. 1, the base station apparatus 100 transmits broadcast information, control information, or data to the user device 200. The broadcast information is transmitted through an NR-PBCH and an NR-PDSCH, the control information is transmitted through an NR-PDCCH and an NR-PDSCH, and data is transmitted through an NR-PDSCH. Both the base station apparatus 100 and the user device 200 can transmit and receive a signal by performing beamforming.

The user device 200 is a communication device that has a radio communication function, such as a smartphone, a mobile phone, a tablet, a wearable terminal, or a communication module for machine-to-machine (M2M) and is wirelessly connected to the base station apparatus 100 to use various communication services provided by the radio communication system. As illustrated in Fig. 1, the user device 200 transmits a capability indication by an uplink to the base station apparatus 100. The uplink transmission is performed through, for example, an NR-physical uplink control channel (PUCCH) or an NR-physical uplink shared channel (PUSCH). Control information is transmitted through the NR-PUCCH and data and control information are transmitted through the NR-PUSCH.

In the embodiment, a duplex scheme may be a time division duplex (TDD) scheme, may be a frequency division duplex (FDD) scheme, or may be another scheme (for example, a flexible duplex scheme or the like).

In the following description, transmission of a signal using a transmission beam may be transmission of a signal multiplied by a precoding vector (precoded by a precoding vector). Similarly, reception of a signal using a reception beam may be reception of a signal multiplied by a signal received with a predetermined weight vector. In addition, transmission of a signal using a transmission beam may be expressed by transmitting a signal using a specific antenna port. Similarly, reception of a signal using a reception beam may be expressed by receiving a signal using a specific antenna port. The antenna port refers to a logical antenna port or a physical antenna port defined in compliance with the 3GPP standard. It should be noted that methods of forming a transmission beam and a reception beam are not limited to the foregoing methods. For example, a method of changing an angle of each antenna in the base station apparatus 100 and the user device 200 including a plurality of antennas may be used, a method of combining a method of using a precoding vector and a method of changing an angle of an antenna may be used, another antenna panel may be changed and used, a method of combining methods used in accordance with a plurality of antenna panels, or other methods may be used. In addition, for example, a plurality of different transmission beams may be used at a high-frequency band. Using a plurality of transmission beams is referred to as a multi-beam operation and using one transmission beam is referred to as a single beam operation.

(Embodiment)

Hereinafter, one or more embodiments will be described.

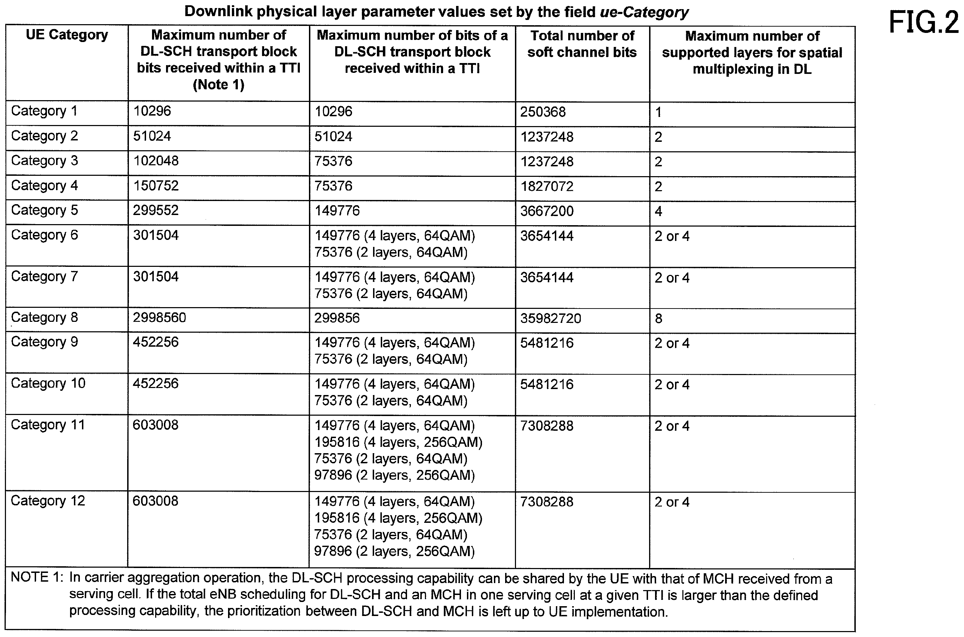

Fig. 2 is a diagram illustrating an example (1) of a UE category in LTE. As illustrated in Fig. 2, as parameters defined for each UE category in a downlink physical layer, the maximum number of transmission and reception bits per transmission time interval (TTI), the maximum software buffer size, and the maximum number of MIMO layers are defined. As illustrated in Fig. 2, for example, in Category 6, the maximum number of transmission and reception bits per TTI is 301504, the maximum number of transmission and reception bits per TTI corresponding to one transport block is 149776 in the case of 4 layers 64 quadrature amplitude modulation (QAM) and is 75376 in the case of 2 layers 64 QAM, the maximum software buffer size is 3654144, and the maximum number of MIMO layers is 2 or 4. In addition, for example, in Category 12, the maximum number of transmission and reception bits per TTI is 603008, the maximum number of transmission and reception bits per TTI corresponding to one transport block is 149776 in the case of 4 layers 64 QAM, is 195816 in the case of 4 layers 256 QAM, is 75376 in the case of 2 layers 64 QAM, and is 97896 in the case of 2 layers 256 QAM, the maximum software buffer size is 7308288, and the maximum number of MIMO layers is 2 or 4. The other UE categories are defined in the same way.

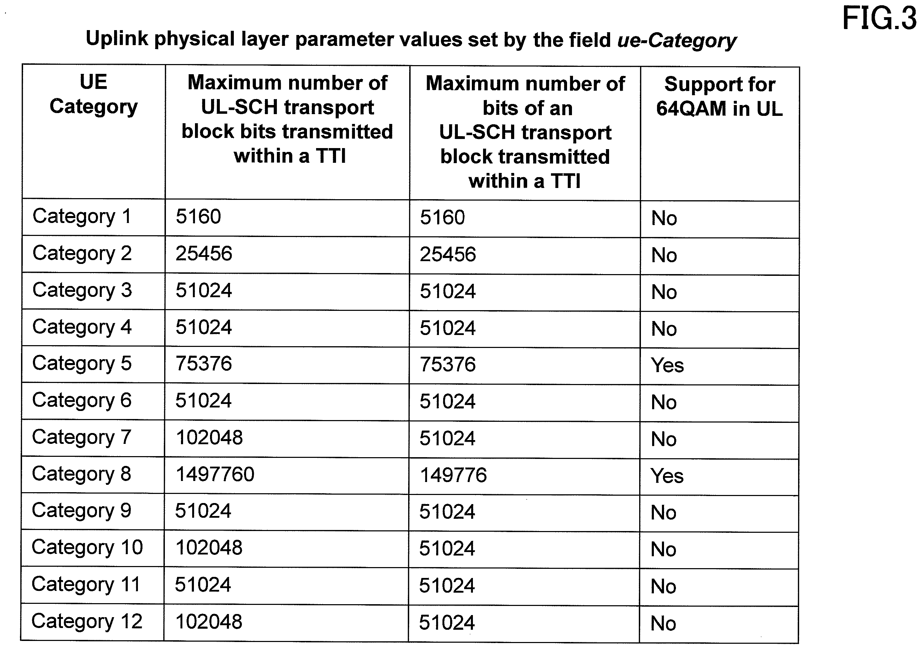

Fig. 3 is a diagram illustrating an example (2) of the UE categories in LTE. In Fig. 3, as parameters defined for each UE category in an uplink physical layer, the maximum number of transmission and reception bits per TTI and whether to support 64 QAM are defined. As illustrated in Fig. 3, for example, in Category 3, the maximum number of transmission and reception bits per TTI is 51024, the maximum number of transmission and reception bits per TTI corresponding to one transport block is 51024, and 64 QAM is not supported. In addition, for example, in Category 8, the maximum number of transmission and reception bits per TTI is 1497760, the maximum number of transmission and reception bits per TTI corresponding to one transport block is 149776, and 64 QAM is supported. The other UE categories are defined in the same way.

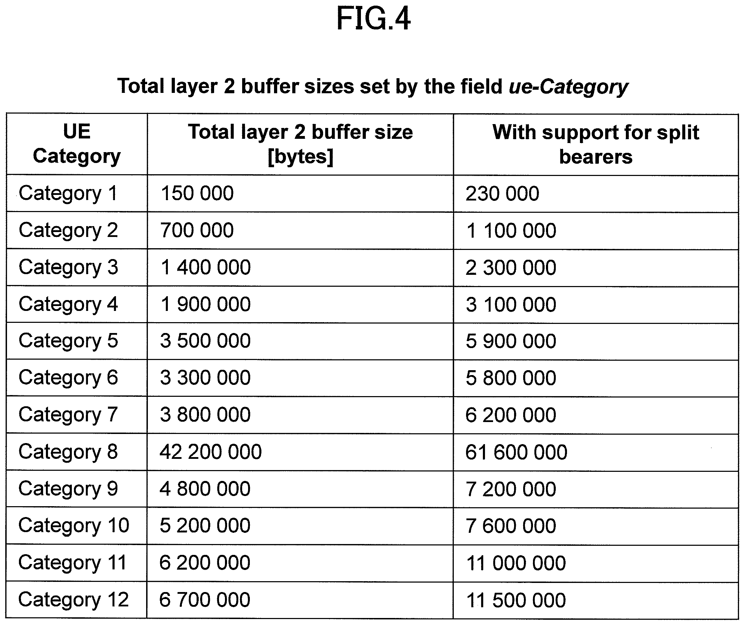

Fig. 4 is a diagram illustrating an example (3) of the UE categories in LTE. In Fig. 4, a total layer 2 buffer size and a buffer size in the case of support for split bearers are defined for each UE category. As illustrated in Fig. 4, for example, in Category 1, the total layer 2 buffer size is 150000 and the buffer size in the case of support for split bearers is 230000. In addition, for example, in Category 10, the total layer 2 buffer size is 5200000 and the buffer size in the case of support for split bearers is 7600000. The other UE categories are defined in the same way.

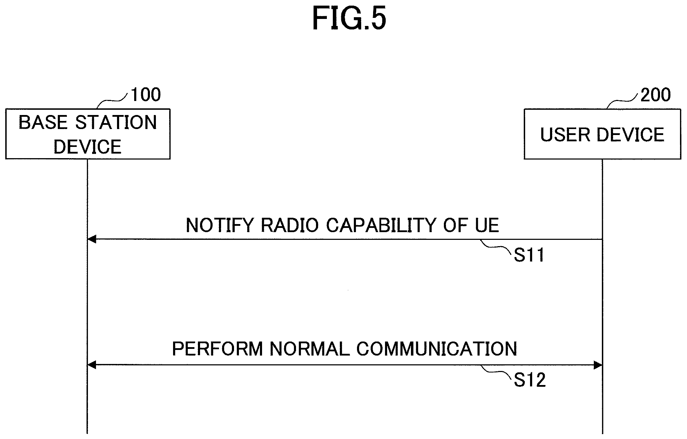

Fig. 5 is a sequence diagram illustrating an example of UE capability indication according to the embodiment of the invention. In step S11 illustrated in Fig. 5, the user device 200 transmits a radio capability indication of the UE to the base station apparatus 100. The base station apparatus 100 appropriately sets radio parameters, scheduling, and the like based on the received radio capability indication of the UE and performs normal communication (S12).

Here, in NR, the indication of the UE category can be omitted on the assumption that the user device 200 supports a radio capability, that is, a baseband capability in accordance with an RF capability, that is, a BB capability.

However, when the radio capability exceeds the baseband capability of the user device 200, the user device 200 indicates, to the base station apparatus 100, the UE categories under the condition that dual connectivity (DC) is not used. The fact that the radio capability exceeds the baseband capability means that, for example, a maximum throughput is higher mathematically.

In the DC, cooperation of UE capabilities is necessary between network nodes, that is, master nodes or secondary nodes. Therefore, when the radio capability exceeds the baseband capability of the user device 200, indication of the UE categories is not supported.

The foregoing indication of the UE categories is omitted, and thus the user device 200 does not explicitly indicate, to the base station apparatus 100, values of the software buffer size or the total layer 2 buffer size conventionally specified (defined) in association with UE categories. Therefore, a problem occurs in that a network node side including the base station apparatus 100 cannot perform rate matching or scheduling by considering the availability of a buffer of the user device 200.

Accordingly, the software buffer size or the total layer 2 buffer size of the user device 200 is defined as follows.

The user device 200 computes a buffer size to be prepared.

The base station apparatus 100 implicitly or explicitly computes a buffer size prepared by the user device 200 based on the radio capability of the UE acquired by the base station apparatus 100 by radio capability indication of the UE illustrated in step S11 of Fig. 5.

For example, the software buffer size of the user device 200 is computed as follows:

$$\text{Software buffer size} = \text{The number of receivable}$$

$$\text{bits} \times \text{The number of hybrid automatic repeat-request (ARQ)}$$

$$\text{(HARQ) processes} \times \text{The number of component carriers (CCs)} \times$$

$$\text{The number of MIMO layers}$$

Here, "the number of receivable bits" may be an instantaneous value per unit time, may be a value based on TDD config, or may be a value in which UL simultaneous transmission capability is considered. TDD config is, for example, a disposition configuration in a time domain of a symbol used in an uplink or a downlink of a radio frame.

In addition, for "the number of HARQ processes," a software buffer size may be computed from an HARQ roundtrip time (RTT). When the user device 200 supports a plurality of HARQ processes or RTTs, the software buffer size may be computed based on a minimum value, a maximum value, or an average value of the plurality of HARQ processes or RTTs.

In addition, "the number of CCs" may be the maximum number in band combination supported by the user device 200.

The number of MIMO layers may be the maximum number in the band combination supported by the user device 200.

The network, that is, the base station apparatus 100 may explicitly indicate, to the user device 200, some or all of the foregoing parameters by broadcast information or individual signaling. In addition, for example, some or all of the parameters may be implicitly indicated based on a release version which is supported by gNB which is the base station apparatus 100 in NR.

For example, the total layer 2 buffer size of the user device 200 is computed as follows:

$$\text{Total layer 2 buffer size} = \text{The number of}$$

$$\text{receivable bits} \times \text{RTT} + \text{The number of transmittable bits} \times$$

$$\text{RTT}$$

Here, "the number of receivable bits" may be an instantaneous value per unit time, may be a value based on TDD config, or may be a value in which UL simultaneous transmission capability is considered, as in the computation of the software buffer size.

The RTT may be a value to which a radio link control (RLC) RTT, a scheduling delay, and a delay in a network, that is, a delay in an X2 interface or the like are added.

In addition, as in the computation of the software buffer size, the network, that is, the base station apparatus 100 may explicitly indicate, to the user device 200, some or all of the foregoing parameters by broadcast information or individual signaling. In addition, for example, some or all of the parameters may be implicitly indicated based on a release version which is supported by gNB which is the base station apparatus 100 in NR.

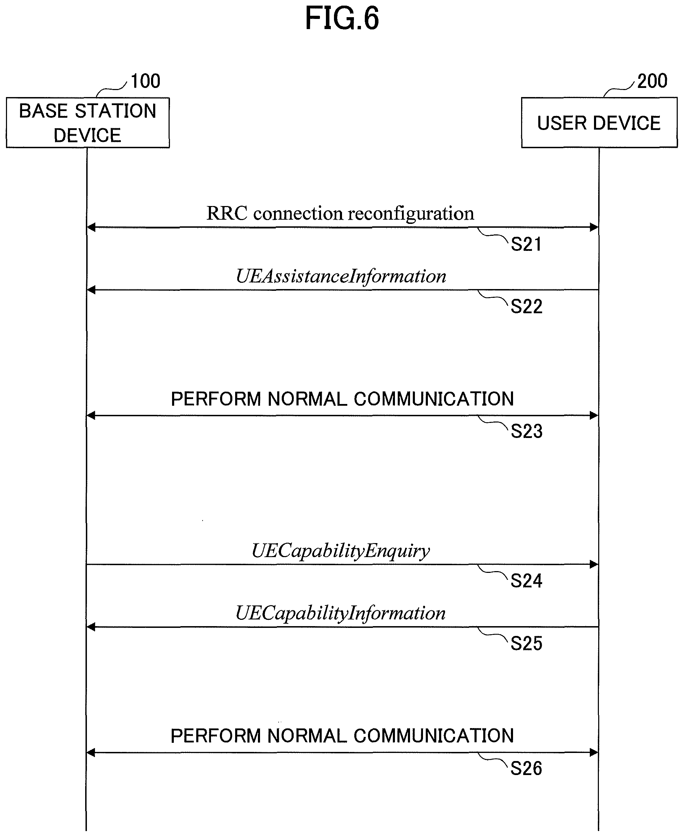

Fig. 6 is a sequence diagram illustrating an example (1) in which a UE buffer size is changed according to the embodiment of the invention. A conventional software buffer or total layer 2 buffer is prepared independently from another buffer of the user device 200. On the other hand, for example, with an increase in a peak rate in the NR, it is necessary to mount a buffer with a large size, and thus a problem occurs in that cost of the user device 200 increases. Accordingly, a region prepared for the software buffer or the total layer 2 buffer is assumed to be shared with a functional unit inside another user device 200, for example, a functional unit other than a radio functional unit.

Therefore, it is also necessary to recognize a buffer-occupied situation (buffer availability) inside the user device 200 on the network side. Accordingly, there is consideration of performing control or signaling in which the user device 200 indicates, to the network, a buffer sharing capability inside the device and the size of the buffer.

For example, when a change in a size or the like occurs in a buffer which can be used for radio, the user device 200 indicates, to the network side, that is, the base station apparatus 100, the change. As illustrated in Fig. 6, in step S22 after RRC connection reconfiguration of step S21, the indication including information indicating a change in the buffer may be transmitted from the user device 200 to the base station apparatus 100 through UE assistance information. Based on the indicated change in the buffer, the base station apparatus 100 adjusts the radio parameters, the scheduling, or the like and performs normal communication (S23).

For example, when the change occurs in the buffer which can be used for radio and the user device 200 indicates, to the network side, that is, the base station apparatus 100, the change, the user device 200 may implicitly indicate to the base station apparatus 100 by using information included in UECapabilityInformation which is a response at the time of reception (S24) of UECapabilityEnquiry from the base station apparatus 100 (S25). That is, in step S24, the user device 200 can indicate the change in the buffer in step S25 only when the network, that is, the base station apparatus 100 makes a request. The information included in UECapabilityInformation may be, for example, band combination or may be other radio parameter. Based on the indicated change in the buffer, the base station apparatus 100 adjusts the radio parameters, the scheduling, or the like and performs normal communication (S26).

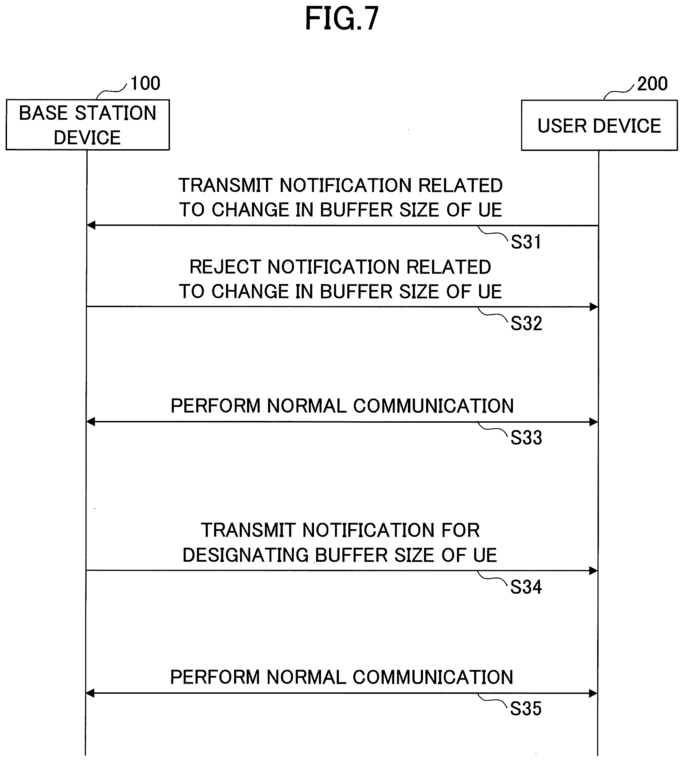

Fig. 7 is a sequence diagram illustrating an example (2) in which the UE buffer size is changed according to the embodiment of the invention. Indication for explicitly or implicitly specifying a buffer size of the UE is performed as in Fig. 5 or 6.

In step S31, the user device 200 transmits an explicit or implicit indication related to the change in the buffer size of the UE to the base station apparatus 100. Subsequently, in step S32, the base station apparatus 100 may reject the indication related to the change in the buffer size of the UE. Due to the rejection, the user device 200 prepares a radio buffer before the change in the buffer size. Accordingly, normal communication is performed without changing the buffer size of the user device 200 (S33).

In step S34, the base station apparatus 100 may transmit an indication for explicitly or implicitly specifying the buffer size of the UE. The user device 200 prepares the specified buffer size based on the indication for explicitly or implicitly designating the buffer size of the UE and performs normal communication (S35).

In addition, to avoid changing the buffer size of the UE frequently, the base station apparatus 100 may specify a frequency for the change in the buffer size in the user device 200. For example, the base station apparatus 100 may specify the frequency for the change in the buffer size in the user device 200 by explicitly indicating, to the user device 200, the frequency itself such as one time per minute.

In addition, for example, a "suppression timer" for suppressing the change in the buffer size may be introduced. The user device 200 activates the suppression timer at the time of the change in the buffer size and the indication related to the change in the buffer size. During a timer operation, the change in the buffer size and the indication related to the change in the buffer size may not be performed. When the timer expires, the change in the buffer size and the indication related to the change in the buffer size can be performed. The suppression timer may be activated or reactivated at the time of transmission of UE capability information.

As in the above-described embodiment, the base station apparatus 100 or the user device 200 can compute and identify a necessary buffer size in accordance with the radio capability parameter of the UE. Accordingly, the base station apparatus 100 can identify the buffer size of the user device 200 and adjust the rate matching and the scheduling based on the buffer size without having the UE categories indicated by the user device 200. In addition, the base station apparatus 100 can also specify the buffer size by explicitly or implicitly indicating, to the user device 200, the necessary buffer size. In addition, based on the radio capability parameters of the UE, the base station apparatus 100 or the user device 200 implicitly computes the buffer size. Thus, because it is not necessary to indicate the buffer size, it is possible to reduce signaling. In addition, because the user device 200 does not explicitly indicate the value of the software buffer size or the total layer 2 buffer size conventionally specified (defined) based on the UE categories, it is difficult for the network side, that is, the base station apparatus 100, to perform rate matching or scheduling in accordance with availability of a buffer of the user device 200. However, since the base station apparatus 100 can compute and identify a necessary buffer size based on the radio capability parameter of the UE according to the above-described embodiment, the network side, that is, the base station apparatus 100, can perform rate matching or scheduling in accordance with availability of a buffer of the user device 200.

That is, in the radio communication system, the base station apparatus can accurately identify the capability of the user device and perform efficient communication.

(Device Configurations)

Next, functional configurations of the base station apparatus 100 and the user device 200 performing the above-described processing and operations will be described. The base station apparatus 100 and the user device 200 each have at least functions of realizing the embodiment. Here, the base station apparatus 100 and the user device 200 may each have only some of the functions in the embodiment.

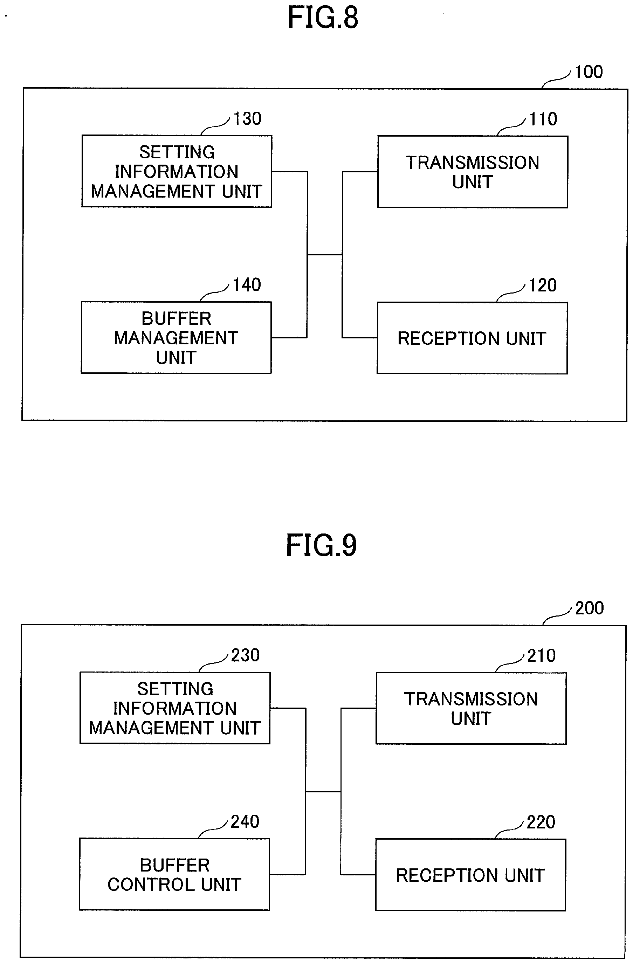

Fig. 8 is a diagram illustrating an example of a functional configuration of the base station apparatus 100. As illustrated in Fig. 8, the base station apparatus 100 includes a transmission unit 110, a reception unit 120, a setting information management unit 130, and a buffer management unit 140. The functional configuration illustrated in Fig. 8 is merely exemplary. Any functional division and any name of the functional unit can be used as long as the operations according to the embodiment of the invention can be performed.

The transmission unit 110 has a function of generating a signal to be transmitted to the user device 200 and wirelessly transmitting the signal. The reception unit 120 has a function of receiving various signals transmitted from the user device 200 and acquiring information regarding, for example, higher layers from the received signals. In addition, the transmission unit 110 has a function of transmitting the NR-PSS, the NR-SSS, the NR-PBCH, the NR-PDCCH, the NR-PDSCH, or the like to the user device 200. In addition, the transmission unit 110 transmits the broadcast information, the control information, or the data to the user device 200.

The setting information management unit 130 stores preset setting information and various kinds of setting information to be transmitted to the user device 200. Examples of content of the setting information include broadcast information and control information.

The buffer management unit 140 specifies various buffer sizes of the user device 200 and performs scheduling in accordance with the buffer sizes, as described in the embodiment.

Fig. 9 is a diagram illustrating an example of a functional configuration of the user device 200. As illustrated in Fig. 9, the user device 200 includes a transmission unit 210, a reception unit 220, a setting information management unit 230, and a buffer control unit 240. The functional configuration illustrated in Fig. 9 is merely exemplary. Any functional division and any name of the functional unit can be used as long as the operations according to the embodiment of the invention can be performed.

The transmission unit 210 creates a transmission signal from transmission data and wirelessly transmits the transmission signal. The reception unit 220 wirelessly receives various signals and acquires signals of the higher layers from the received signals of the physical layer. The reception unit 220 has a function of receiving the NR-PSS, the NR-SSS, the NR-PBCH, the NR-PDCCH, the NR-PDSCH, or the like transmitted from the base station apparatus 100. The transmission unit 210 transmits an uplink signal to the base station apparatus 100 and the reception unit 120 receives the broadcast information, the control information, the data, or the like from the base station apparatus 100. The setting information management unit 230 stores various kinds of setting information received from the base station apparatus 100 by the reception unit 220. The setting information management unit 230 also stores preset setting information. Examples of content of the setting information include the information regarding the various buffer sizes of the user device 200.

The buffer control unit 240 autonomously determines various buffer sizes in the user device 200 or controls the buffer sizes in response to a request from the base station apparatus 100, as described in the embodiment. It should be noted that a functional unit related to reception of a control signal or the like in the buffer control unit 240 may be included in the reception unit 220.

(Hardware Configuration)

The diagrams of the functional configurations (Figs. 8 and 9) used to describe the embodiment of the above-described invention illustrate blocks of functional units. The functional blocks (configuration units) are realized by any combination of hardware and/or software. In addition, realization means of each functional block is not particularly limited. That is, each functional block may be realized by one device in which a plurality of elements are joined physically and/or logically or may be realized by a plurality of devices in which two or more devices that are separated physically and/or logically are connected directly and/or indirectly (for example, a wired and/or wireless manner).

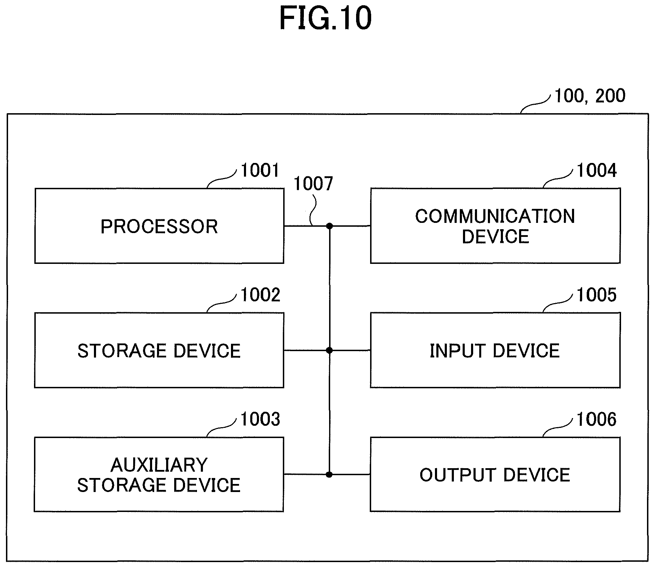

In addition, for example, both the base station apparatus 100 and the user device 200 according to an embodiment of the invention function as computers that perform the processing according to the embodiment of the invention. Fig. 10 is a diagram illustrating an example of a hardware configuration of a radio communication device which is the base station apparatus 100 or the user device 200 according to the embodiment of the invention. Each of the base station apparatus 100 and the user device 200 described above may be configured as a computer device that physically includes a processor 1001, a storage device 1002, an auxiliary storage device 1003, a communication device 1004, an input device 1005, an output device 1006, a bus 1007, and the like.

It should be noted that, in the following description, a term "device" can be substituted with a circuit, a device, a unit, or the like. The hardware configuration of the base station apparatus 100 and the user device 200 may be configured to include one device or a plurality of devices among devices denoted by reference numerals 1001 to 1006 illustrated in the drawing or may be configured not to include some of the devices.

Each function in the base station apparatus 100 and the user device 200 is realized by reading predetermined software (a program) on hardware such as the processor 1001, the storage device 1002, and the like so that the processor 1001 performs an operation and controlling communication of the communication device 1004 and reading and/or writing data in the storage device 1002 and the auxiliary storage device 1003.

The processor 1001 controls, for example, the entire computer by operating an operating system. The processor 1001 may be configured as a central processing unit (CPU) that includes an interface with a peripheral device, a control device, an operation device, a register, and the like.

In addition, the processor 1001 reads a program (a program code), a software module, or data from the auxiliary storage device 1003 and/or the communication device 1004 to the storage device 1002 and performs various kinds of processing in accordance with the program, the software module, or the data. As the program, a program causing a computer to execute at least some of the operations described in the above-described embodiment is used. For example, the transmission unit 110, the reception unit 120, the setting information management unit 130, and the buffer management unit 140 of the base station apparatus 100 illustrated in Fig. 8 may be stored in the storage device 1002 and may be realized by a control program operated by the processor 1001. In addition, for example, the transmission unit 210, the reception unit 220, the setting information management unit 230, and the buffer control unit 240 of the user device 200 illustrated in Fig. 9 may be stored in the storage device 1002 and may be realized by a control program operated by the processor 1001. The above-described various kinds of processing performed by one processor 1001 have been described, but may be performed simultaneously or in sequence by two or more processors 1001. The processor 1001 may be mounted on one or more chips. It should be noted that the program may be transmitted from a network via an electric communication line.

The storage device 1002 is a computer-readable recording medium and may be configured as at least one of, for example, a read-only memory (ROM), an erasable programmable ROM (EPROM), an electrically erasable programmable ROM (EEPROM), a random access memory (RAM), and the like. The storage device 1002 may be called a register, a cache, a main memory (a main memory device), or the like. The storage device 1002 can store a program (a program code), a software module, or the like which can be executed to perform processing according to an embodiment of the invention.

The auxiliary storage device 1003 is a computer-readable recording medium and may be configured as at least one of, for example, an optical disc such as a compact disc ROM (CD-ROM), a hard disk drive, a flexible disc, a magneto-optical disc (for example, a compact disc, a digital versatile disc, a Blu-ray (registered trademark) disc), a smart card, a flash memory (for example, a card, a stick, a key drive), a floppy (registered trademark) disk, a magnetic strip, and the like. The auxiliary storage device 1003 may be called an auxiliary storage device. The above-described storage medium may be, for example, a database including the storage device 1002 and/or the auxiliary storage device 1003 or an appropriate medium other than a server.

The communication device 1004 is hardware (a transceiving device) that performs communication between computers via a wired and/or wireless network and is also referred to as, for example, a network device, a network controller, a network card, a communication module, or the like. For example, the transmission unit 110 and the reception unit 120 of the base station apparatus 100 may be realized in the communication device 1004. The transmission unit 210 and the reception unit 220 of the user device 200 may be realized in the communication device 1004.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs an output to the outside. It should be noted that the input device 1005 and the output device 1006 may be an integrated configuration (for example, a touch panel).

In addition, the devices such as the processor 1001 and the storage device 1002 are connected via the bus 1007 to communicate information. The bus 1007 may be configured as a single bus or may be configured as different buses between the devices.

In addition, the base station apparatus 100 and the user device 200 may each include hardware such as a microprocessor, a digital signal processor (DSP), an application specific integrated circuit (ASIC), a programmable logic device (PLD), and a field programmable gate array (FPGA) or some or all of the functional blocks may be realized by the hardware. For example, the processor 1001 may be mounted as at least one of the hardware.

(Conclusion of Embodiment)

As described above, according to an embodiment of the invention, there is provided a user device that performs communication with a base station apparatus. The user device includes: a control unit that computes a buffer size based on a radio capability parameter of the user device; a transmission unit that transmits a capability indication including the radio capability parameter to the base station apparatus; and a reception unit that receives a signal transmitted from the base station apparatus using a buffer with the computed buffer size.

In the foregoing configuration, the base station apparatus 100 or the user device 200 can compute and identify a necessary buffer size in accordance with a radio capability parameter of the UE. In the radio communication system, the base station apparatus can accurately identify the capability of the user device and perform efficient communication.

The radio parameters may include some or all of the number of bits which the user device is able to receive per predetermined time, the number of HARQ processes, the number of component carriers, and the number of MIMO layers. In the foregoing configuration, the base station apparatus 100 or the user device 200 implicitly computes the buffer size based on the radio capability parameter of the UE. Thus, because it is not necessary to indicate the buffer size, the signaling can be reduced.

The number of bits which the user device is able to receive per predetermined time may be computed based on a configuration of a radio frame related to time division duplex or synchronous transmission capabilities of an uplink and a downlink. The number of HARQ processes may be computed based on a round trip time of HARQ. The number of component carriers and the number of MIMO layers may be maximum numbers in a band combination supported by the user device. In the foregoing configuration, the base station apparatus 100 or the user device 200 implicitly computes the buffer size based on the radio capability parameter of the UE. Thus, because it is not necessary to indicate the buffer size, the signaling can be reduced.

When a radio capability exceeds a baseband capability of the user device and the user device communicates with the base station apparatus using dual connectivity, the control unit may compute the buffer size based on the radio capability parameter of the user device. In the foregoing configuration, since synchronization of the UE capability with the base station apparatus 100 performing DC is not necessary, the signaling can be reduced.

When the reception unit receives a request for the capability indication from the base station apparatus, a change in the buffer size may be explicitly transmitted to the base station apparatus. Alternatively, when the reception unit receives an indication for explicitly specifying the buffer size from the base station apparatus, a signal transmitted from the base station apparatus may be received using a buffer with the specified buffer size. In the foregoing configuration, since the buffer size can be updated at a timing specified by the base station apparatus 100 and the buffer size specified by the base station apparatus 100 can be applied to the user device 200, the base station apparatus 100 can easily manage the buffer size of the user device 200.

In addition, according to the embodiment of the invention, there is provided a base station apparatus that performs communication with a user device. The base station apparatus includes: a reception unit that receives a capability indication including a radio capability parameter of the user device from the user device; a management unit that computes a buffer size based on the radio capability parameter; and a transmission unit that generates a signal to be transmitted to the user device based on the computed buffer size.

In the foregoing configuration, the base station apparatus 100 or the user device 200 can compute and identify a necessary buffer size in accordance with a radio capability parameter of the UE. In the radio communication system, the base station apparatus can accurately identify the capability of the user device and perform efficient communication.


(Supplements of Embodiment)


The embodiments of the invention have been described above, but the disclosed invention is not limited to the embodiments and various modified examples, corrected examples, substituted examples, displaced examples, and the like can be understood by those skilled in the art. The description has been made using the specific numerical value examples in order to promote the understanding of the invention, but theses numerical values are merely exemplary and any appropriate values may be used unless otherwise stated. The division of the items in the foregoing description is not essential for the invention, the factors described in two or more items may be combined and used as necessary and the factors described in certain items may be applied to the factors described in the other items (unless inconsistent). The boundaries of the functional units or the processing units in the functional block diagrams not necessarily correspond to boundaries of physical components. The operation of a plurality of functional units may be performed physically by one component or the operation of one functional unit may be performed physically by a plurality of components. The procedure of the processing described in the embodiments may be switched unless the processing procedure is inconsistent. To facilitate the description of processing, the base station apparatus 100 and the user device 200 have been described with reference to the functional block diagrams, but these devices may be realized by hardware, software, or a combination thereof. Software operated by the processor included in the base station apparatus 100 according to the embodiment of the invention and software operated by the processor included in the user device 200 according to the embodiment of the invention may each be stored in a random access memory (RAM), a flash memory, a read-only memory (ROM), an EPROM, an EEPROM, a register, a hard disk (HDD), a removable disc, a CD-ROM, a database, or any appropriate storage medium other than a server.

In addition, the indication of the information may be performed in accordance with another method without being limited to the mode/embodiment described in the present specification. For example, the indication of the information may be performed with physical layer signaling (for example, downlink control information (DCI) or uplink control information (UCI)), higher layer signaling (for example, radio resource control (RRC) signaling, a medium access control (MAC) signaling), broadcast information (master information block (MIB) or system information block (SIB)), and other signal or a combination thereof. In addition, the RRC signaling may be called an RRC message and may be, for example, RRC connection setup message, an RRC connection reconfiguration message, or the like.

Each mode/embodiment described in the present specification may be applied to a system using long term evolution (LTE), LTE-Advanced (LTE-A), SUPER 3G, IMT-Advanced, 4G, 5G, future radio access (FRA), W-CDMA (registered trademark), GSM (registered trademark), CDMA 2000, Ultra Mobile Broadband (UMB), IEEE 802.11 (Wi-Fi), IEEE 802.16 (WiMAX), IEEE 802.20, Ultra-Wide Band (UWB), Bluetooth (registered trademark), or another appropriate system and/or a next-generation system extended based thereon.

A sequence of the processing procedure, the sequence, the flowchart, and the like of each mode/embodiment described in the present specification may be switched unless inconsistent. For example, the methods described in the present specification suggest elements of various steps in the exemplary sequences and the invention is not limited to the suggested specific sequences.

A specific operation performed by the base station apparatus 100 in the present specification is also performed by an upper node thereof depending on a case. In a network formed of one network node or a plurality of network nodes including the base station apparatus 100, it is apparent that various operations performed to communicate with the user device 200 can be performed by the base station apparatus 100 and/or another network node (for example, MME, S-GW, or the like is considered, but the invention is not limited thereto) other than the base station apparatus 100. A case in which the number of other network nodes other than the base station apparatus 100 is one has been exemplified above, but a plurality of other network nodes (for example, MME and S-GW) may be combined.

Each mode/embodiment described in the present specification may be used singly, may be used in combination, or may be switched in association with execution.

The user device 200 is also called a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or another appropriate term by those skilled in the art.

The base station apparatus 100 is also called a NodeB (NB), an enhanced NodeB (eNB), a gNB, a base station, or another appropriate term by those skilled in the art.

The term "determining" used in the present specification includes diverse operations in some cases. The "determining" can also include the fact that, for example, judging, calculating, computing, processing, deriving, investigating, looking up (for example, looking up in a table, a database, or another data structure), or ascertaining is considered to be "determining." In addition, the "determining" can also include the fact that receiving (for example, receiving information), transmitting (for example, transmitting information), input, output, or accessing (for example, accessing data in a memory) is considered to be "determining." In addition, the "determining" can include the fact that resolving, selecting, choosing, establishing, or comparing is regarded as "determining." That is, the "determining" can include the fact that any operation is considered to be "determined."

The description "based on" used in the present specification does not mean "based on only" unless otherwise stated. In other words, the description "based on" means both "based on only" and "based on at least."

The terms "include," "including," and modifications thereof are intended to be comprehensive similarly to the term "comprising" as long as the terms are used in the present specification or the claims. Further, the term "or" used in the present specification or the claims is intended not to be exclusive OR.

In the entire present disclosure, for example, when the articles such as a, an, and the in English are added in translation, the articles can include a plurality of articles unless clearly stated in the contexts.

It should be noted that, in the embodiments of the invention, the buffer control unit 240 is an example of a control unit. The buffer management unit 140 is an example of a management unit.

The invention has been described in detail above, but it is apparent to those skilled in the art that the invention is not limited to the embodiments described in the present specification. The invention can be embodied in correction and modification aspects without departing from the gist and the scope of the invention described in the claims. Accordingly, the description of the present specification has been made for exemplary description and does not have any limited meaning to the invention.

This international patent application is based on and claims priority to Japanese Patent Application No. 2017-187260, filed on September 27, 2017, and the entire content of Patent Application No. 2017-187260 is incorporated herein by reference.

EXPLANATIONS OF LETTERS OR NUMERALS

100    BASE STATION APPARATUS
200    USER DEVICE
110    TRANSMISSION UNIT
120    RECEPTION UNIT

130    SETTING INFORMATION MANAGEMENT UNIT
140    BUFFER MANAGEMENT UNIT
200    USER DEVICE
210    TRANSMISSION UNIT
220    RECEPTION UNIT
230    SETTING INFORMATION MANAGEMENT UNIT
240    BUFFER CONTROL UNIT
1001    PROCESSOR
1002    STORAGE DEVICE
1003    AUXILIARY STORAGE DEVICE
1004    COMMUNICATION DEVICE
1005    INPUT DEVICE
1006    OUTPUT DEVICE

**Claims**

1.    A user device that performs communication with a base station apparatus, the user device comprising:

a control unit that computes a buffer size based on a radio capability parameter of the user device;
a transmission unit that transmits a capability indication including the radio capability parameter to the base station apparatus; and
a reception unit that receives a signal transmitted from the base station apparatus using a buffer with the computed buffer size.

2.    The user device according to claim 1,
wherein the radio capability parameter includes some or all of the number of bits which the user device is able to receive per predetermined time, the number of HARQ processes, the number of component carriers, and the number of MIMO layers.

3.    The user device according to claim 2,
wherein the number of bits which the user device is able to receive per predetermined time is computed based on a configuration of a radio frame related to time division duplex or synchronous transmission capabilities of an uplink and a downlink,
wherein the number of HARQ processes is computed based on a round trip time of HARQ, or
wherein the number of component carriers and the number of MIMO layers are maximum numbers in a band combination supported by the user device.

4.    The user device according to claim 1,
wherein when a radio capability exceeds a baseband capability of the user device and the user device communicates with the base station apparatus using dual connectivity, the control unit computes the buffer size based on the radio capability parameter of the user device.

5.    The user device according to claim 1,
wherein when the reception unit receives a request for the capability indication from the base station apparatus, a change in the buffer size is explicitly transmitted to the base station apparatus, or
wherein when the reception unit receives an indication for explicitly specifying the buffer size from the base station apparatus, a signal transmitted from the base station apparatus is received using a buffer with the specified buffer size.

6.    A base station apparatus that performs communication with a user device, the base station apparatus comprising:

a reception unit that receives a capability indication including a radio capability parameter of the user device from the user device;
a management unit that computes a buffer size based on the radio capability parameter; and
a transmission unit that generates a signal to be transmitted to the user device based on the computed buffer size.

# FIG.1

BROADCAST INFORMATION/
CONTROL INFORMATION/DATA

100

CELL

200

CAPABILITY
NOTIFICATION

**Downlink physical layer parameter values set by the field *ue-Category***

| UE Category | Maximum number of DL-SCH transport block bits received within a TTI (Note 1) | Maximum number of bits of a DL-SCH transport block received within a TTI | Total number of soft channel bits | Maximum number of supported layers for spatial multiplexing in DL |
|---|---|---|---|---|
| Category 1 | 10296 | 10296 | 250368 | 1 |
| Category 2 | 51024 | 51024 | 1237248 | 2 |
| Category 3 | 102048 | 75376 | 1237248 | 2 |
| Category 4 | 150752 | 75376 | 1827072 | 2 |
| Category 5 | 299552 | 149776 | 3667200 | 4 |
| Category 6 | 301504 | 149776 (4 layers, 64QAM)<br>75376 (2 layers, 64QAM) | 3654144 | 2 or 4 |
| Category 7 | 301504 | 149776 (4 layers, 64QAM)<br>75376 (2 layers, 64QAM) | 3654144 | 2 or 4 |
| Category 8 | 2998560 | 299856 | 35982720 | 8 |
| Category 9 | 452256 | 149776 (4 layers, 64QAM)<br>75376 (2 layers, 64QAM) | 5481216 | 2 or 4 |
| Category 10 | 452256 | 149776 (4 layers, 64QAM)<br>75376 (2 layers, 64QAM) | 5481216 | 2 or 4 |
| Category 11 | 603008 | 149776 (4 layers, 64QAM)<br>195816 (4 layers, 256QAM)<br>75376 (2 layers, 64QAM)<br>97896 (2 layers, 256QAM) | 7308288 | 2 or 4 |
| Category 12 | 603008 | 149776 (4 layers, 64QAM)<br>195816 (4 layers, 256QAM)<br>75376 (2 layers, 64QAM)<br>97896 (2 layers, 256QAM) | 7308288 | 2 or 4 |
| NOTE 1: In carrier aggregation operation, the DL-SCH processing capability can be shared by the UE with that of MCH received from a serving cell. If the total eNB scheduling for DL-SCH and an MCH in one serving cell at a given TTI is larger than the defined processing capability, the prioritization between DL-SCH and MCH is left up to UE implementation. | | | | |

FIG.2

FIG.3

**Uplink physical layer parameter values set by the field *ue-Category***

| UE Category | Maximum number of UL-SCH transport block bits transmitted within a TTI | Maximum number of bits of an UL-SCH transport block transmitted within a TTI | Support for 64QAM in UL |
|---|---|---|---|
| Category 1 | 5160 | 5160 | No |
| Category 2 | 25456 | 25456 | No |
| Category 3 | 51024 | 51024 | No |
| Category 4 | 51024 | 51024 | No |
| Category 5 | 75376 | 75376 | Yes |
| Category 6 | 51024 | 51024 | No |
| Category 7 | 102048 | 51024 | No |
| Category 8 | 1497760 | 149776 | Yes |
| Category 9 | 51024 | 51024 | No |
| Category 10 | 102048 | 51024 | No |
| Category 11 | 51024 | 51024 | No |
| Category 12 | 102048 | 51024 | No |

EP 3 691 314 A1

# FIG.4

**Total layer 2 buffer sizes set by the field *ue-Category***

| UE Category | Total layer 2 buffer size [bytes] | With support for split bearers |
|---|---|---|
| Category 1 | 150 000 | 230 000 |
| Category 2 | 700 000 | 1 100 000 |
| Category 3 | 1 400 000 | 2 300 000 |
| Category 4 | 1 900 000 | 3 100 000 |
| Category 5 | 3 500 000 | 5 900 000 |
| Category 6 | 3 300 000 | 5 800 000 |
| Category 7 | 3 800 000 | 6 200 000 |
| Category 8 | 42 200 000 | 61 600 000 |
| Category 9 | 4 800 000 | 7 200 000 |
| Category 10 | 5 200 000 | 7 600 000 |
| Category 11 | 6 200 000 | 11 000 000 |
| Category 12 | 6 700 000 | 11 500 000 |

# FIG.5

# FIG.6

# FIG.7

BASE STATION
DEVICE 100

USER DEVICE 200

TRANSMIT NOTIFICATION RELATED
TO CHANGE IN BUFFER SIZE OF UE
S31

REJECT NOTIFICATION RELATED
TO CHANGE IN BUFFER SIZE OF UE
S32

PERFORM NORMAL COMMUNICATION
S33

TRANSMIT NOTIFICATION FOR
DESIGNATING BUFFER SIZE OF UE
S34

PERFORM NORMAL COMMUNICATION
S35

# FIG.8

100

130
SETTING
INFORMATION
MANAGEMENT UNIT

110
TRANSMISSION
UNIT

140
BUFFER
MANAGEMENT
UNIT

120
RECEPTION UNIT

# FIG.9

200

230
SETTING
INFORMATION
MANAGEMENT UNIT

210
TRANSMISSION
UNIT

240
BUFFER
CONTROL UNIT

220
RECEPTION UNIT

# FIG.10

## INTERNATIONAL SEARCH REPORT

| International application No. |
|---|
| PCT/JP2018/035742 |

**A. CLASSIFICATION OF SUBJECT MATTER**
Int.Cl. H04W8/24(2009.01)i, H04W16/32(2009.01)i, H04W72/04(2009.01)i

According to International Patent Classification (IPC) or to both national classification and IPC

**B. FIELDS SEARCHED**

Minimum documentation searched (classification system followed by classification symbols)
Int.Cl. H04W8/24, H04W16/32, H04W72/04

Documentation searched other than minimum documentation to the extent that such documents are included in the fields searched
| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2017-17401 A (NTT DOCOMO, INC.) 19 January 2017, paragraphs [0028]-[0055] & US 2018/0124774 A1, paragraphs [0095]-[0123] & WO 2016/208693 A1 & EP 3316609 A1 & CN 107615795 A | 1-3, 6<br>4-5 |
| A | NOKIA NETWORKS, NOKIA CORPORATION, Total layer-2 buffer size for split-bearer capable UEs, 3GPP TSG RAN WG2#88 R2-144921, 21 November 2014 | 1-6 |
| P, A | NTT DOCOMO, INC., Total L2 buffer size calculation, 3GPP TSG RAN WG2#99bis R2-1711618, 29 September 2017 | 1-6 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 December 2018 (06.12.2018) | 18 December 2018 (18.12.208) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017187260 A

- WO 2017187260 A

**Non-patent literature cited in the description**

- *3GPP TS 36.331 V14.3.0,* June 2017

- *3GPP TS 36.306 V14.3.0,* June 2017